(19) Europäisches Patentamt

European Patent Office

Office européen des brevets

(11) **EP 1 168 787 B1**

(12) **EUROPEAN PATENT SPECIFICATION**

(45) Date of publication and mention
of the grant of the patent:
**14.12.2005 Bulletin 2005/50**

(51) Int Cl.⁷: **H04M 3/22**

(21) Application number: **01112631.5**

(22) Date of filing: **23.05.2001**

(54) **Monitoring device and method for monitoring a telecommunication network**

Überwachung Einheit und Verfahren für die Überwachung eines Fernmeldenetzes

Dispositif de surveillance et méthode pour surveiller un réseau de télécommunication

(84) Designated Contracting States:
**DE FR GB IT**

(30) Priority: **23.06.2000 EP 00113402**

(43) Date of publication of application:
**02.01.2002 Bulletin 2002/01**

(73) Proprietor: **Tektronix Berlin GmbH & Co. KG**
**13629 Berlin (DE)**

(72) Inventors:
• **Rizzi, Edoardo**
**38022 Cavizzana (TN) (IT)**
• **Innocenti, Michele**
**35031 Abano Terme (PD) (IT)**
• **Galetto, Stefano**
**45026 Lendinara (RO) (IT)**

(74) Representative: **Schurack, Eduard F. et al**
**Hofstetter, Schurack & Skora**
**Balanstrasse 57**
**81541 München (DE)**

(56) References cited:
**US-A- 5 448 624      US-A- 5 787 164**
**US-A- 5 867 564      US-A- 5 905 715**

**Description**

BACKGROUND OF THE INVENTION

The present invention relates to the monitoring of a telecommunication network, and more particularly to a monitoring device and method for determining post dial delay actually perceived by a user.

The quality of service (QoS) provided by a telephone network depends upon a number of factors, among which major roles are played by availability, reliability and call clarity. The availability is related to the actual possibility of gaining access to a service once a request has been forwarded, and to the time it takes to complete such an operation. The reliability from a general point of view refers to the customer expectation of maintaining access to the service as long as needed without interruptions. The call clarity is mainly associated with the intelligibility of the information delivered by the network, i.e., the speech quality for telephone networks.

Assessing QoS is a fundamental task for network operators to promptly highlight malfunctions and to detect possible anomalies in order to avoid customer dissatisfaction, and to verify Service Level Agreement (SLA) conformance. In the evolving telecommunication scenario more and more often traditional local networks are remotely interconnected by means of long distance third party carriers. These carriers may offer cost effective solutions at a reasonably high QoS by exploiting emerging communication technologies. Moreover modern international networks have evolved from point-to-point networks interconnecting different countries to more complex networks with multiple routes between countries. As a consequence the choice of the best route is made on a comparative basis as a trade-off between QoS and costs.

Network operators show therefore an increasing interest in dedicated instrumentation able to appropriate monitor network performance. In-Service Nonintrusive Measurement Devices (INMDs) are suitable for assessing QoS basically by monitoring the signaling associated with calls in progress. Amongst the parameters that an INMD may evaluate by monitoring the signaling, such as the Answer Seizure Ratio (ASR), the Rejected Calls Ratio (RCR) and the Incomplete Calls Ratio (ICR), the Post Dial Delay (PDD) covers a very important role where there is need for comparing different routes to the same destination or to assess the performance of the current route being used.

PDD is defined as the time interval between the end of user or terminal equipment dialling and the reception of an appropriate network message. Such a delay, associated with connection establishment, impacts primarily on customer satisfaction since it is directly perceived by the user. Also it impacts on the costs incurred by the local operators when routing their traffic through long distance carriers since the calls are invoiced as soon as connection establishment is required.

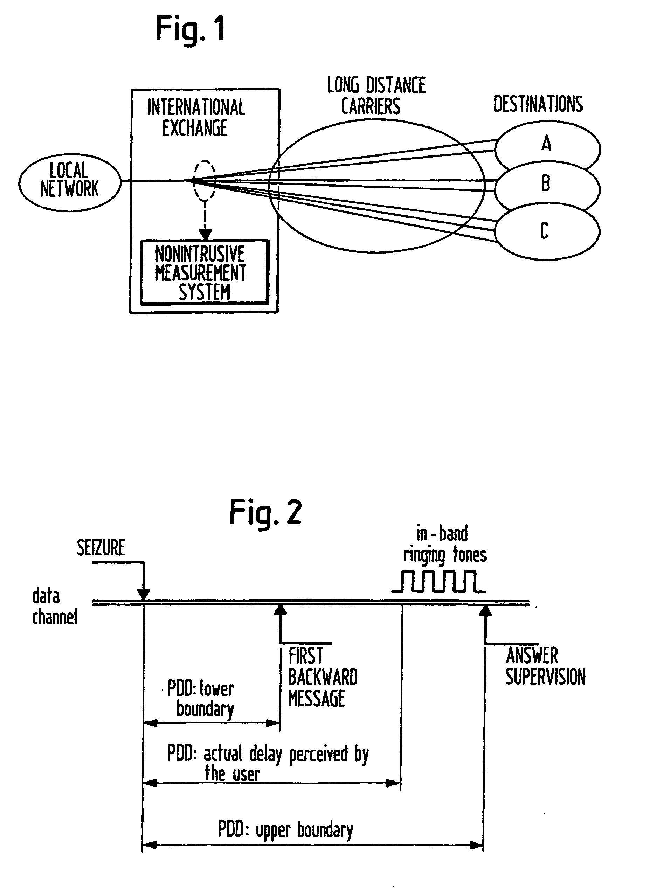

Traditional measurement systems provide estimates of PDD by observing the signalling messages within the data channel of the network, and a typical approach is illustrated in Fig. 1. A first estimate may be easily obtained by calculating the time interval between the seizure and the first network response in the backward direction, as shown in Fig. 2. In some circumstances such an estimate may be acceptable since it fixes a lower boundary, but only partial information is gained about the actual network behavior. Another estimate of PDD may be obtained by calculating the time interval between the seizure and the receipt of answer supervision. However as seen from Fig. 2 such an interval, even if it provides an upper boundary for PDD, is strictly dependent on the customer behaviour and therefore is not suitable as an absolute measure.

Document US 5,787,164 deals with "raw call data", i.e. actual physical events on the voice line such as voltage changes in the detailed example given are captured. These data are compiled into messages which in turn are interpreted as call events. Timers are used to determine times between physical events as well as duration of certain physical events. Alternatively signalling events may be measured in the same manner over data links. No indication can be found that both physical and signal events are combined to provide measurement results.

Document US 5,448,624 aims at measuring the time of response by an operator. The test transceiver (DTMF) sends dial tones for effecting a call, receives a ring back signal and then detects a voice response. The time of each event is recorded. Therefore, it refers to an intrusive approach that requires to place a test call to obtain the measurement, so that monitoring of the signalling information is not needed, as it is generated. Moreover, all signals are merely detected on the voice links. Dial tones are detected as audible tones. The device according to the US 5,448,624 dials itself and keeps record of the end of the dialling. It derives that the time at which call processing begins is recorded, i.e. no measurement and no evaluation is effected. Monitoring of signalling information cannot be gathered from the US 5,448,624.

Document US 5,867,564 provides a method of measuring delay between the time a customer dials a phone number of a called party and the time the customer hears a ring back tone indicating that the called party was alerted to the call. However, this method also relies on measurements taken during test calls.

What is desired is a more effective measurement of PDD that is suitable as an absolute measure of telecommunication network performance.

BRIEF SUMMARY OF THE INVENTION

The problems of the prior art are overcome by the invention according to the independent claims 1 and 3.

Accordingly the present invention provides a monitor device and method for determining an absolute measure of telecommunication network performance. Signaling information on a data channel of the telecommunication network is monitored to detect the end of dialing, resetting a post dial delay (PDD) counter at that point. Then an associated voice channel of the telecommunication network is monitored until a useful signal is detected, such as a ringing tone. At that time the PDD counter is stopped and the contents reflect the absolute PDD for the call. Statistical analysis of PDD over multiple samples provides a measure of telecommunication network performance for Service Level Agreement (SLA) conformance.

The objects, advantages and other novel features of the present invention are apparent from the following detailed description when read in conjunction with the appended claims and attached drawing.

BRIEF DESCRIPTION OF THE SEVERAL VIEWS OF THE DRAWING

Fig. 1 is a general block diagram view of a telecommunication network using an in-service nonintrusive measurement system.
Fig. 2 is a time line diagram view of methods for determining PDD for a telecommunication network.
Fig. 3 is a flow diagram view of a method of determining PDD according to the present invention.
Fig. 4 is a time line diagram view of the method of Fig. 3 according to the present invention.
Fig. 5 is a graphic diagram view for determining the number of samples required for statistical analysis of telecommunication network performance measurements.

DETAILED DESCRIPTION OF THE INVENTION

Described below is a more effective measurement of PDD that has been developed and implemented in an INMD. The detection of the forward signaling messages is combined with the analysis of the in-band signal conveyed by the corresponding voice channel in the backward direction. From such an implementation the time interval between seizure and the first network response actually perceived by the user is assessed, as shown in Fig. 2. Also the measurement is not influenced by customer behavior, i.e., how long it takes the customer to respond at the other end from the user. Further the measurement is performed even if the call is not answered by the customer. Finally the performance of complex networks is managed either on a comparative or on an absolute basis.

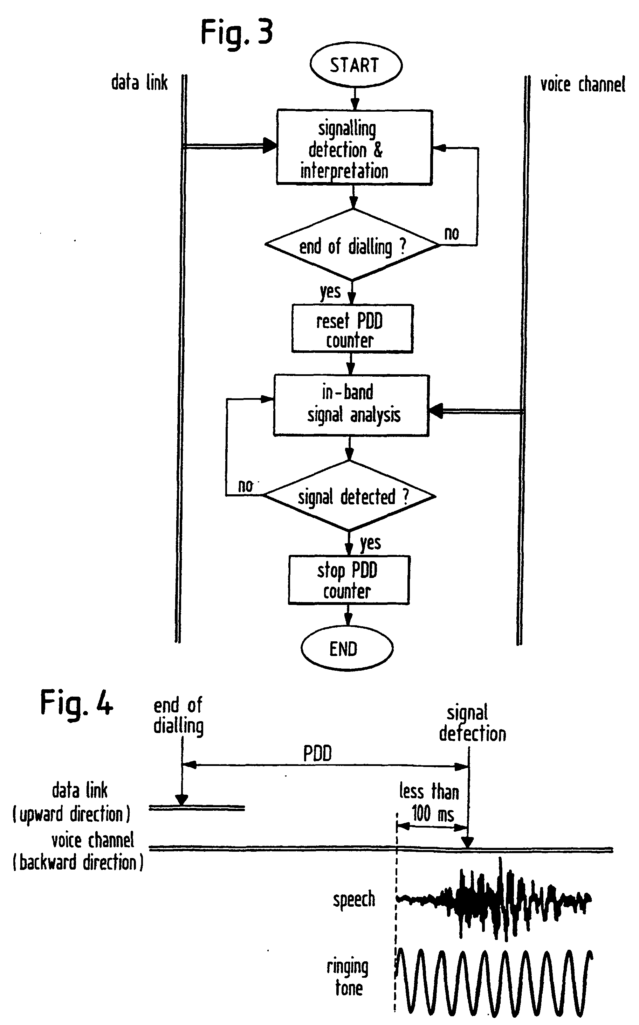

The INMD is adjoined to the telecommunication network under test as shown in Fig. 1 such that the data links and the corresponding voice channels are available. Referring now to Fig. 3 as soon as a new call establishment is detected, the system starts and gets ready to analyze and interpret the associated signaling. In particular the system recognizes the instant when the end of dialing occurs by looking for the appropriate message (SEIZURE). When this occurs a PDD counter is reset and in-band signal analysis is activated. The in-band signal analysis uses a signal processing technique that is applied to the signal actually perceived by the user and conveyed by the voice channel. Once a signal is detected in the voice channel, the PDD counter is stopped and the measurement is complete. The contents of the PDD counter contain an absolute measure of PDD for the call independent of customer behavior.

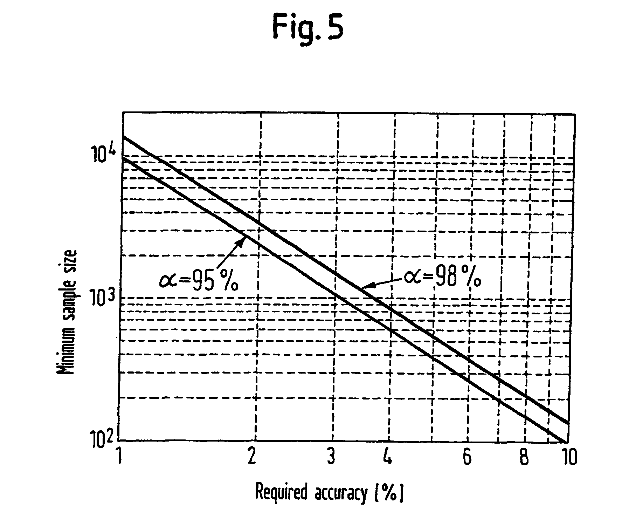

The implemented signal processing technique is insensible to any sort of noise that may be present in the network, whether it be wide-band or impulsive. Less than 100 ms are needed to detect the presence of a useful signal, as shown in Fig. 4. The useful signal may be a tone, such as a busy tone or ringing tone, or a speech signal such as is associated with a recorded message. As soon as the useful signal is detected, the analysis is suspended and the PDD determined.

PDD is one of a certain number of parameters which defines the performance of a network. In order to verify SLA conformance, the performance of the network needs to be periodically assessed using suitable instrumentation and proper analysis techniques. To perform this statistical analysis, thresholding is applied to a sample of PDD measurements by calculating the percentage of measurements above or below the threshold, such as 15 seconds. To generate an alarm such a percentage is compared with a tolerable maximum percentage, such as 20%. The minimum sample size to be statistically significant may be easily calculated using the graph shown in Fig. 5 for confidence intervals of 95% and 98%.

As an example, having defined:

➢ $PDD_{th}$ = threshold for PDD measurements = 15 seconds
➢ P = percentage of PDD measurements exceeding $PDD_{th}$
➢ $P_{th}$ = threshold for P = 20%
➢ A = required accuracy = 5%
➢ $\alpha$ = confidence interval = 95%
from Fig. 5
➢ $N_{min}$ = minimum sample size = 380

Then for a sample of $N_{min}$ PDD measurements an alarm is generated if:

$$P > (P_{th} + A)$$

Thus the present invention provides a monitoring device and method for determining telecommunication network performance using post dial delay as a user perceived measure by resetting a PDD counter when dialing is completed as determined by appropriate signaling messages from the data channel, and stopping the PDD counter when a useful signal is detected in the voice channel.

**Claims**

1. A non-intrusive monitoring device comprising

   - means for monitoring signaling information on data links of a telecommunication network of calls in progress to determine as a first point in time the time of circuit seizure;
   - means for monitoring user traffic on voice links of the telecommunication network of calls in progress to determine as a second point in time the time when the telecommunication network responds with an inband signal;
   - means for combining the first point in time and the second point in time for deriving a measure for the post dial delay of the telecommunication network.

2. The monitoring device according to claim 1, wherein the first point in time is the point in time when a last key has been pressed.

3. A non-intrusive method of monitoring a telecommunication network comprising the step of:

   a) monitoring signaling information on data links of a telecommunication network of calls in progress to determine as a first point in time the time of circuit seizure;
   b) monitoring user traffic on voice links of the telecommunication network of calls in progress to determine as a second point in time the time when the telecommunication network responds with an in-band signal;
   c) combining the first point in time and the second point in time for deriving a measure for the post dial delay of the telecommunication network.

**Patentansprüche**

1. Eindringungsfreie Überwachungsvorrichtung mit

   - einer Einrichtung zum Überwachen einer Signalisierungsinformation auf Datenübermittlungsabschnitten eines Telekommunikationsnetzwerks von in Gang befindlichen Gesprächsverbindungen, um als ersten Zeitpunkt den Zeitpunkt der Schaltungsbelegung zu ermitteln;
   einer Einrichtung zum Überwachen des Benutzerverkehrs auf Sprachübermittlungsabschnitten des Telekommunikationsnetzwerks von in Gang befindlichen Gesprächsverbindungen, um als zweiten Zeitpunkt den Zeitpunkt zu ermitteln, zu dem das Telekommunikationsnetzwerk mit einem Inband-Signal reagiert;
   - einer Einrichtung zum Kombinieren des ersten Zeitpunkts und des zweiten Zeitpunkts zum Ableiten eines Maßes für den Rufverzug des Telekommunikationsnetzwerks.

2. Überwachungsvorrichtung nach Anspruch 1, wobei der erste Zeitpunkt der Zeitpunkt ist, zu dem eine letzte Taste gedrückt wurde.

3. Eindringungsfreies Verfahren zum Überwachen eines Telekommunikationsnetzwerks mit den Schritten:

   a) Überwachen einer Signalisierungsinformation auf Datenübermittlungsabschnitten eines Telekommunikationsnetzwerks von in Gang befindlichen Gesprächsverbindungen, um als ersten Zeitpunkt den Zeitpunkt der Schaltungsbelegung zu ermitteln;
   b) Überwachen des Benutzerverkehrs auf Sprachübermittlungsabschnitten des Telekommunikationsnetzwerks von in Gang befindlichen Gesprächsverbindungen, um als zweiten Zeitpunkt den Zeitpunkt zu ermitteln, zu dem das Telekommunikationsnetzwerk mit einem Inband-Signal reagiert;
   c) Kombinieren des ersten Zeitpunkts und des zweiten Zeitpunkts, um ein Maß für den Rufverzug des Telekommunikationsnetzwerks abzuleiten.

**Revendications**

1. Dispositif de surveillance non intrusive comprenant :

   - un moyen pour surveiller des informations de signalisation sur des liens de données d'un réseau de télécommunication d'appels en progression pour déterminer l'instant de prise de circuit en tant que premier point dans le temps ;
   - un moyen pour surveiller le trafic des usagers sur des liens vocaux du réseau de télécommunication d'appels en progression pour déterminer l'instant auquel le réseau de télécommunication réagit par un signal dans la bande en tant que deuxième point dans le temps ;
   - un moyen pour combiner le premier point dans le temps et le deuxième point dans le temps pour dériver une mesure de retard de post-composition du réseau de télécommunication.

2. Dispositif de surveillance selon la revendication 1, dans lequel le premier point dans le temps est le point dans le temps auquel une dernière touche a été enfoncée.

3. Méthode de surveillance non intrusive d'un réseau de télécommunication, comprenant les étapes de :

a) surveiller des informations de signalisation sur des liens de données d'un réseau de télécommunication d'appels en progression pour déterminer l'instant de prise de circuit en tant que premier point dans le temps ;
b) surveiller le trafic des usagers sur des liens vocaux du réseau de télécommunication d'appels en progression pour déterminer l'instant auquel le réseau de télécommunication réagit par un signal dans la bande en tant que deuxième point dans le temps;
c) combiner le premier point dans le temps et le deuxième point dans le temps pour dériver une mesure de retard de post-composition du réseau de télécommunication.

# Fig. 1

LONG DISTANCE
CARRIERS

DESTINATIONS

INTERNATIONAL
EXCHANGE

LOCAL
NETWORK

A

B

C

NONINTRUSIVE
MEASUREMENT
SYSTEM

# Fig. 2

in-band
ringing tones

SEIZURE

data
channel

FIRST
BACKWARD
MESSAGE

ANSWER
SUPERVISION

PDD: lower
boundary

PDD: actual delay perceived by
the user

PDD: upper boundary

## Fig. 3

data link

voice channel

START

signalling detection & interpretation

end of dialling ?  — no

yes

reset PDD counter

in-band signal analysis

signal detected ?  — no

yes

stop PDD counter

END

## Fig. 4

end of dialling

signal defection

PDD

data link (upward direction)

voice channel (backward direction)

less than 100 ms

speech

ringing tone

# Fig. 5